# EUROPEAN PATENT SPECIFICATION

(11) **EP 3 656 145 B1**
(45) Date of publication and mention of the grant of the patent: **06.09.2023**
(21) Application number: 17748659.4
(22) Date of filing: 17.07.2017
(51) Int. Cl.: H04W 12/04, H04L 9/08, H04W 12/08, H04N 21/266, H04W 4/06, H04L 9/40, H04L 9/16, H04N 21/81, H04W 12/0431

(54) **ENCRYPTED AUDIO STREAMING**
VERSCHLÜSSELTES AUDIOSTREAMING
DIFFUSION AUDIO EN CONTINU CHIFFRÉE

(43) Date of publication of application: 27.05.2020
(73) Proprietor: Sonova AG, 8712 Stäfa (CH)
(72) Inventor: GEHRING, Stephan, 8713 Uerikon (CH)
(86) International application number: PCT/EP2017/068013
(87) International publication number: WO 2019/015739

(56) References cited:
- EP-A1- 1 804 462
- US-A1- 2006 062 393
- US-A1- 2006 251 256
- US-A1- 2010 005 294
- US-A1- 2011 231 659

## Description

The disclosure relates to a method and a system for transmitting an encrypted audio stream from an audio source device to audio receiver devices.

An audio stream may be transmitted from an audio source to a plurality of audio sinks by broadcasting, with the audio source acting as a broadcasting device which unidirectionally sends information to the receiver devices, wherein the receiver devices cannot provide feedback to the broadcasting device as to whether the information was received or not, i.e. there is no uplink.

When wirelessly broadcasting an audio stream from a source, like a TV set, to one or more audio sinks, such as headphones or hearing aids, it may be desirable to encrypt the broadcast content to make it unintelligible to potential eavesdroppers.

Broadcasting audio streams to devices can be performed with various techniques and systems. Three publications (below) describe such techniques and systems.

US 6,041,408 relates to a key distribution method for secure broadcasting between a sender and multiple receivers, wherein the sender and the receivers share a common key information, and wherein a center device is provided for generating and distributing key information.

WO 2015/001135 A2 relates to an audio broadcast streaming method wherein the broadcast audio stream is encrypted and is made accessible to hearing devices by providing a personal device of the user of the respective hearing device with a stream access code including a decryption key required to decrypt the broadcast audio stream; the stream access code may also be encrypted using private-key or public-key cryptography to ensure that only the intended recipient can decrypt and exploit it.

WO 2015/184385 A1 relates to a mesh network of devices, wherein a first device may be associated with a second device by using a group key and a destination device, and wherein a pairwise key is established between the first and second device to enable secure unicast messaging between them.

US2006/062393 A1 discloses an updated session encryption key determining method for use in e.g. cellular telephone, involves receiving sequence number during specific protocol session, and determining updated session key utilizing master key and packet index.

It is an objective of the disclosure to overcome the drawbacks of the prior art and provide an improved method and system for audio streaming, wherein an audio stream is supplied in a convenient and secure manner both to receiver devices which may receive the stream for a relatively long time period and for receiver devices which may receive the stream for a relatively short time period.

According to the some embodiments of the disclosure, this objective is achieved by a method as defined in claim 1 and a system as defined in claim 16, respectively.

A master key and a group key diversifier are distributed to receiver devices which are members of a permanent group, while the group key derived from the master key by using the group key diversifier is distributed to receiver devices which are members of a temporary group, with the members of the permanent group deriving the group key from the received master key by using the received group key diversifier. Thereby a common or single, encrypted audio stream can be transmitted from the audio source device to all receiver devices, wherein the audio source device encrypts the audio stream by using the group key ("using the group key" also includes the use of a key derived from the group key, such as session key) and the receiver devices decrypt the audio stream by likewise using the group key (or a key derived from the group key). Also, access to the encrypted stream can be managed in a particularly convenient manner in the sense that stream access by the members of the temporary group can be granted or revoked in a way that does not significantly interfere with the stream access by the members of the permanent group. In particular, grant or removal of stream access by the members of a temporary group does not require any (new) key to be transmitted to the members of the permanent group, e.g. there is no need for secure transmission of a new key to the members of the permanent group.

In some implementations, a temporary guest access option may be added to a single encrypted stream which is otherwise accessible by a group of permanent receiver devices only.

Some embodiments are defined in the dependent claims.

Examples of the disclosure are illustrated by reference to the drawings, wherein:
- Fig. 1: is a schematic illustration of an example of a wireless streaming system;
- Fig. 2: is a schematic illustration of an example of how an encrypted audio stream may be provided from a broadcasting device to a receiver device, wherein a session key is used for encrypting and decrypting of data;
- Fig. 3: shows a schematic example of a flowchart of the process Fig. 2;
- Fig. 4: is a schematic illustration of an example of a broadcasting system including receiver devices of two different groups;
- Fig. 5: is an illustration similar to that of Fig. 2, wherein, however, a process suitable for devices of two different groups with different rights is illustrated;
- Figs. 6 to 12: are flowcharts illustrating an example of the process illustrated in Fig. 5; and
- Fig. 13: is a schematic illustration of receiver devices divided into three different groups.

The drawings have not necessarily been drawn to scale. Similarly, some components and/or operations may be separated into different blocks or combined into a single block for the purposes of discussion of some of the embodiments of the disclosure. Moreover, while the disclosure is amenable to various modifications and alternative forms, specific embodiments have been shown by way of example in the drawings and are described in detail below. The intention, however, is not to limit the disclosure to the particular embodiments described. On the contrary, the disclosure is intended to cover all modifications, equivalents, and alternatives falling within the scope of the disclosure as defined by the appended claims.

When wirelessly broadcasting an audio stream from a source, like a TV set, to one or more audio sinks, such as headphones or hearing aids, it can be desirable to broadcast content to make it unintelligible to potential eavesdroppers. For example, it may be desirable to prevent neighbors in an apartment building to eavesdrop when broadcasting audio content from a TV set to wireless headphones used by a person living in the apartment building. It may be also desirable to provide audio receiver devices of guests access to such audio stream, for example when watching a football game on TV.

Encryption is a technique to prevent eavesdropping. Encryption of an audio stream by the audio source and decryption of the audio stream by the receiver devices may be achieved by using keys available in the audio source and in the receiver devices.

Accordingly, the disclosure relates to a method and a system for transmitting an encrypted audio stream from an audio source device, such as a TV set, to a plurality of receiver devices, such as hearing devices.

In some implementations, the disclosure distributes a master key and a group key diversifier to receiver devices that are members of a permanent group, while the group key derived from the master key by using the group key diversifier is distributed to receiver devices that are members of a temporary group, with the members of the permanent group deriving the group key from the received master key by using the received group key diversifier. Thereby a common, e.g., a single, encrypted audio stream can be transmitted from the audio source device to all receiver devices, wherein the audio source device encrypts the audio stream by using the group key ("using the group key" also includes the use of a key derived from the group key, such as session key) and the receiver devices decrypt the audio stream by likewise using the group key (or a key derived from the group key). Also, access to the encrypted stream can be managed in a particularly convenient manner in the sense that short-term stream access, e.g., stream access by the members of the temporary group, can be granted or revoked in a way that does not significantly interfere with the long-term stream access by the members of the permanent group. Grant or removal of stream access by the members of a temporary group may not require any (e.g., new) key to be transmitted to the members of the permanent group, e.g., there may not be a need for secure transmission of a new key to the members of the permanent group.

In some implementations, the group key is used to derive a session key by using a session key diversifier that is distributed to all receiver devices from the audio source device, so that all devices may use the session key for encrypting and decrypting of the audio stream, respectively, wherein for each new streaming session a new session key may be used by generating and distributing a new session key diversifier.

According to some embodiments, the disclosure may be applied to a plurality of different temporary groups of receiver devices, wherein with each temporary group a specific group key, or more precisely, a specific group key diversifier, is associated, so that different temporary groups can be distinguished.

In some implementations, the disclosure adds a temporary guest access option to a single encrypted audio stream that is otherwise only accessible by a group of permanent receiver devices. Some implementations are defined in the dependent claims.

An audio stream may include audio data only or audio data of the audio stream may be part of a media stream including audio and video data, e.g., the audio stream also may include video data. Typically, an audio stream is transmitted from an audio source to a plurality of audio sinks by broadcasting, e.g., the audio source acts as a broadcasting device that unidirectionally sends information to the receiver devices, wherein the receiver devices cannot provide feedback to the broadcasting device as to whether the information was received or not, e.g., there is no uplink.

As used herein, a "permanent group" has members to which a master key is distributed, and a "temporary group" has members to which a group key is distributed which can be derived from the master key by using a group key diversifier.

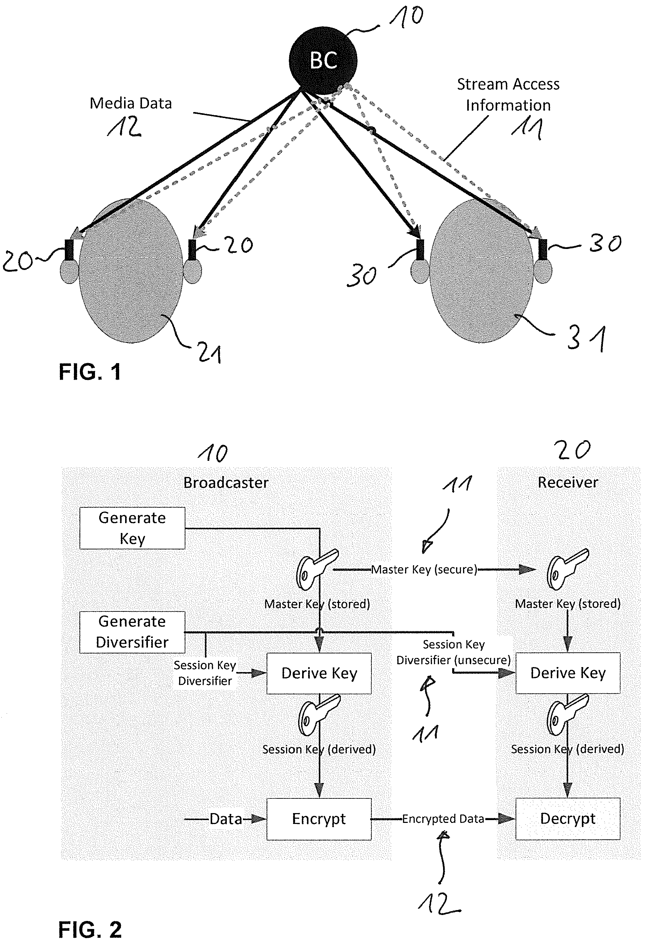

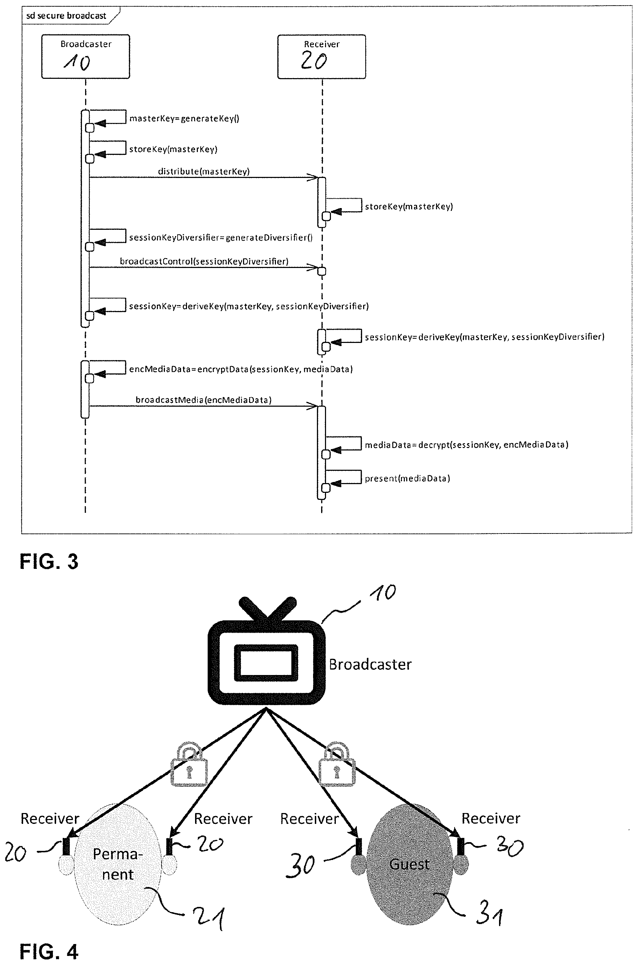

The techniques introduced here can be embodied as special-purpose hardware (e.g., circuitry), as programmable circuitry appropriately programmed with software and/or firmware, or as a combination of special-purpose and programmable circuitry. Hence, embodiments may include a machine-readable medium having stored thereon instructions which may be used to program a computer (or other electronic devices) to perform a process. The machine-readable medium may include, but is not limited to, floppy diskettes, optical disks, compact disc read-only memories (CD-ROMs), magneto-optical disks, ROMs, random access memories (RAMs), erasable programmable read-only memories (EPROMs), electrically erasable programmable read-only memories (EEPROMs), magnetic or optical cards, flash memory, or other type of media / machine-readable medium suitable for storing electronic instructions. In some implementations, the machine-readable medium is non-transitory computer readable medium, where in non-transitory excludes a propagating signal. In some implementations, the methods and algorithms described in Figures 3 and 6-12. In some embodiments, the devices disclosed in Figures 1, 4, and 13 perform some or all of the operations described in Figures 3 and 6-12.

Fig. 1 shows an example of a system for transmitting an audio stream 12 from an audio source device 10 to a plurality of receiver devices, which in the example of Fig. 1 are represented by a first pair of hearing aids 20 worn by a first user 21 and a second pair of hearing aids 30 worn by a second user 31. Typically, the audio source device 10 acts as a broadcasting device, e.g., there is only communication or data transmission from the audio source device 12 to the receiver devices 20, 30, but there is no feedback / uplink form the receiver devices 20, 30 to the audio source device 10.

The audio source device 10 may be, for example, a wireless microphone, a phone device, a tablet computer, a media player, a TV set or an audio streaming device.

The receiver devices 20, 30 may be, for example, hearing instruments, namely hearing aids, such as BTE, ITE or CIC hearing aids, or auditory prostheses, such as cochlear implant devices; according to another example, the receiver devices may be headsets or headphones for normal hearing persons.

Fig. 2 illustrates an example of how secure transmission of a broadcast audio stream from a broadcasting source, such as the audio source device 10, to a receiver device, such as the hearing aids 20, 30, can be achieved. In a first step, the broadcasting device generates a master key which is stored in the broadcasting device and which is transmitted in a secure fashion (which may be "in-band" or "out-of-band") to the receiver devices which likewise store the master key; such "transmission in a secure fashion" includes "in-band transmission", e.g., wireless transmission within the broadcasting technology, and "out-of-band transfer" which may be realized, for example, by displaying the key on the broadcasting device and typing it in the receiver device, or by using a different wireless technology (e.g. NFMI (near field magnetic induction)) or a wired technology (e.g. Ethernet). Then the broadcasting device generates a session key diversifier (typically a random number) which is used for deriving a session key from the stored master key. Further, the session key diversifier is transmitted to the receiver devices which likewise use the session key diversifier for deriving the session key from the stored master key. The session key diversifier may be transmitted in an unsecure fashion. After these steps, the same session key is available both in the broadcasting device and in the receiver devices, so that the session key can be used in the broadcasting device for encrypting data, with the encrypted data being transmitted to the receiver devices which use the session key for decrypting the received data. Thereby, the data stream 12 may be transmitted in an encrypted and therefore secure manner.

While in Fig. 1 the audio data stream is indicated at 12, the distribution of stream access information from the broadcasting device 10 to the receiver devices 20, 30, such as the distribution of the master key and the session key diversifier, is indicated at 11.

Fig. 3 shows an example of a flowchart of the process illustrated in Fig. 2.

In the process of Figs. 2 and 3 only the master key has to be transmitted (for example, by out-of-band transfer) once over a secure connection, while the session key diversifier does not require transmission via a secure connection, so that the session key may be changed for each new session by generating and distributing a new session key diversifier, without the need for any use of a secure connection between the broadcasting device and the receiver device.

The process of Figs. 2 and 3 is particularly suitable for receiver devices which should have access to the encrypted audio stream 12 for a relatively long time, since granting access to the encrypted stream 12 requires secure transmission of the master key to the respective receiver device.

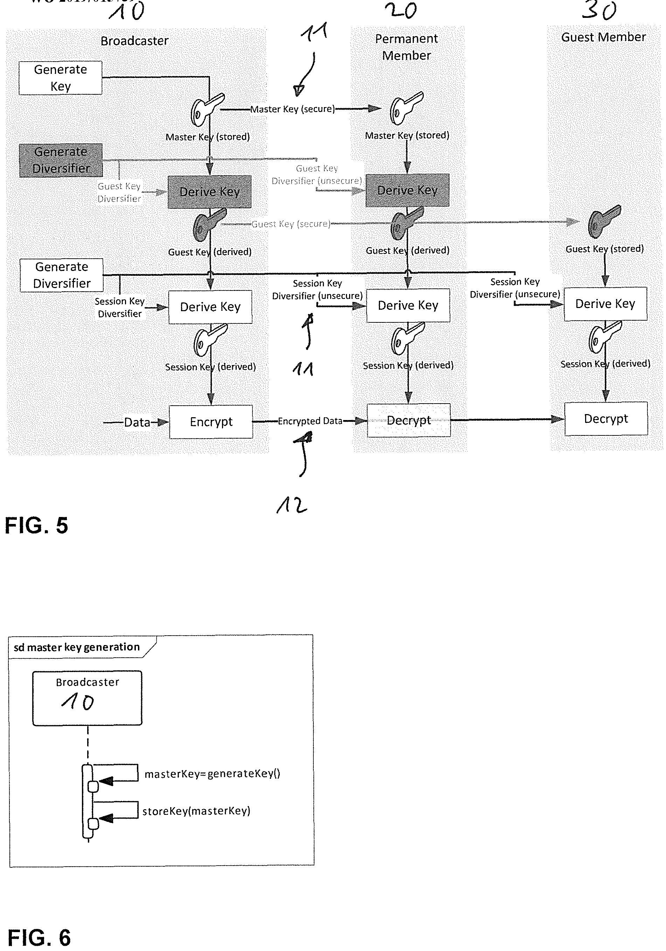

Fig. 5 is an illustration of an example of an encrypted audio streaming process which is particularly beneficial for cases in which access to the encrypted stream should be granted to different receiver devices for different time periods. In particular, for some receiver devices, it may be desirable to provide for a long-term access to the stream (hereinafter referred to as "permanent" access), while for other receiver devices it may be desirable to grant only a short-term access (hereinafter referred to as "temporary" access or "guest" access). That situation is illustrated in Fig. 4, wherein the receiver devices 20 of the permanent user 21 are granted long-term ("permanent") access to the stream 12, while the receiver devices 30 of the guest user 31 are granted only shorter-term ("temporary") access to the stream 12. In such a case, it may be necessary to newly grant access to the stream 12 by the guest receiver devices 30 while the permanent receiver devices 20 already have access to the stream 12 and/or to terminate access to the stream 12 by the guest receiver devices 30 while the access to the stream 12 by the permanent receiver devices 20 continues.

To this end, in Fig. 5 the receiver devices are divided into two groups, namely a first group 22, which is a permanent group in the sense that the members of this group have long-term access to the stream 12, and a second group 32, which is a temporary group or guest group in the sense that the members of the temporary/guest group only have short-term access to the stream 12.

Like in the example of Fig. 2, in a first step a master key is generated by the broadcasting device 10 and is distributed in a secure fashion to the members 20 of the permanent group 22 only, with the master key being both stored in the broadcasting device 12 and the permanent receiver devices 20. It is to be mentioned that permanent members or guest members can be added at any time, e.g., they need not all be present the first time the master key is generated or distributed.

In a second step the broadcasting device 10 generates a guest key diversifier (which may be also labelled "group key diversifier") which is distributed to the members 20 of the permanent group 22, wherein an unsecure way of distribution is sufficient. The group key diversifier then is used both in the broadcasting device 12 and in the members 20 of the permanent group 22 for deriving a guest key (which also may be labelled "group key") from the stored master key. Further, the derived guest key/group key is distributed from the broadcasting device 10 to the members 30 of the temporary group 32 in a secure fashion (e.g. by out-of-band transfer), with the received guest key/group key being stored in the members 30 of the temporary group 32. The guest key/group key also may be stored in the members 20 of the permanent group 22 and in the broadcasting device 10. It is to be noted that the permanent members do not need to persistently store the guest key, since they can derive the guest key from the guest key diversifier transmitted in the clear by the broadcaster when it broadcasts the guest key diversifier (cf. Fig. 5). After this second step, the group key is available in all devices, e.g., in the broadcasting device 12 as well as in the members 20 of the permanent group 22 and the members 30 of the temporary group 32.

In a third step, the broadcasting device 10 generates a session key diversifier which is distributed both to the members 20 of the permanent group 22 and to the members 30 of the temporary group 32, wherein an unsecure transmission channel is sufficient. Then the session key diversifier is used in all devices 12, 20, 30 for deriving a session key from the group key (for example, by using Bluetooth key derivation primitives), so that at the end of this third step the session key is available in all devices 12, 20, 30.

In a fourth step a data stream is transmitted from the broadcasting device 10 to the receiver devices 20, 30 as an audio stream 12 which is encrypted in the broadcasting device 10 by using the session key and which is decrypted in the receiver devices 20, 30 by likewise using the session key.

The first, third and fourth step of the process of Fig. 5 are analogous to the respective steps in the process of Fig. 2, whereas the second step is provided in the process of Fig. 5 specifically for enabling a distinction between permanent member devices 20 and temporary member devices 30.

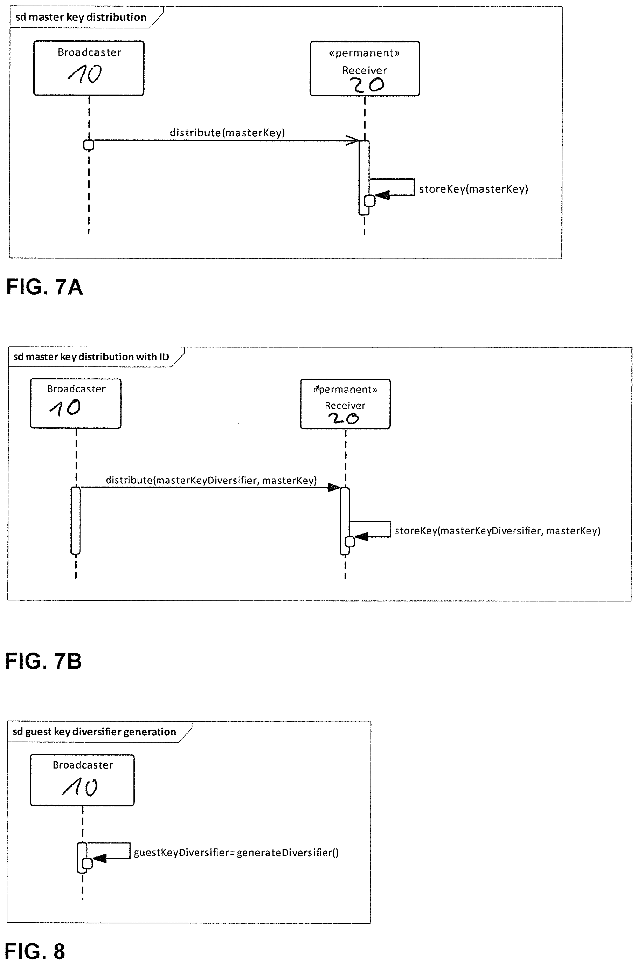

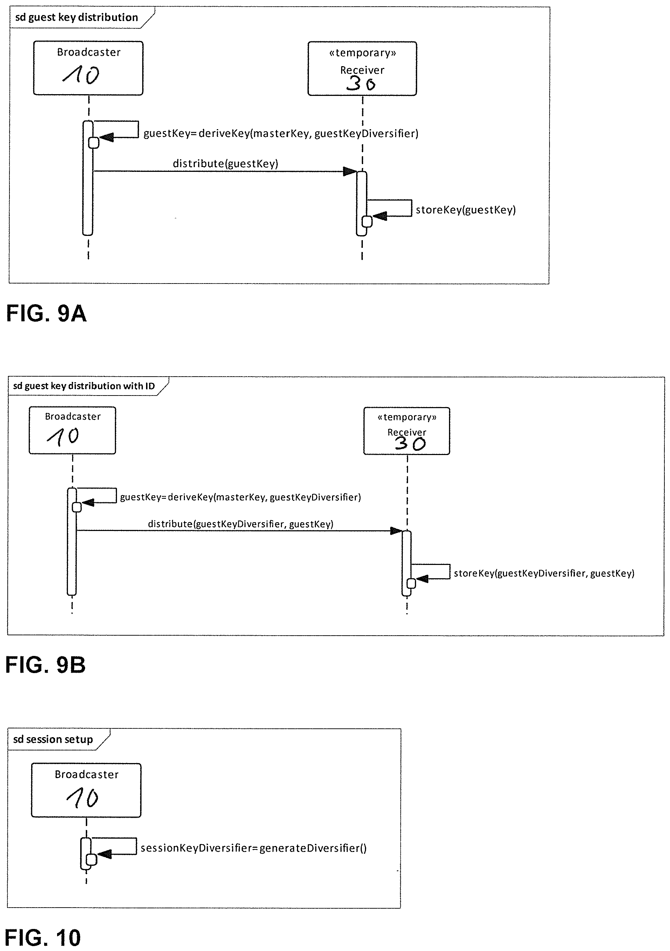

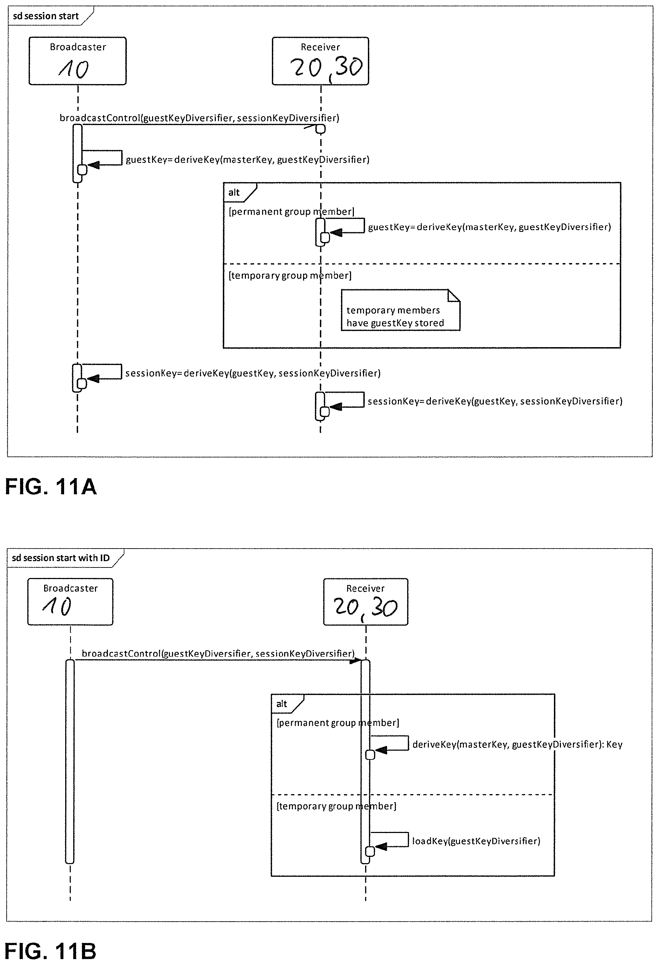

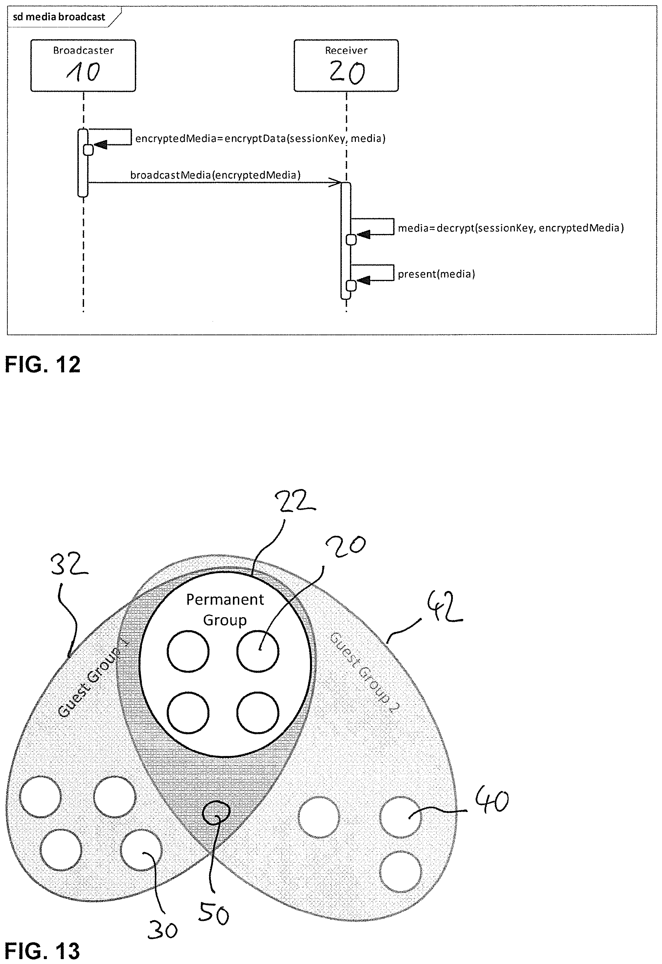

The first step of the process of Fig. 5 is illustrated by the flowcharts of Figs. 6 and 7A, the second step of the process of Fig. 5 is illustrated by the flowcharts of Figs. 8 and 9A, the third step of the process of Fig. 5 is illustrated by the flowcharts of Figs. 10 and 11A, and the fourth step of the process of Fig. 5 is illustrated by the flowchart of Fig. 12.

The distribution of stream access information, which does not require a secure channel, may be achieved by simply transmitting the respective information in clear from the broadcasting device 10 to the respective receiver devices 20, 30; this applies to the distribution of the guest key diversifier and the session key diversifier and may be done repeatedly for redundancy as there is no backchannel and to allow devices to join an ongoing stream (e.g., the devices only have to wait for the next repetition of the diversifiers and can then hook up to the stream).

In the third step of Fig. 5 the broadcasting device 10 may initiate a new streaming session by generating and distributing a new session key diversifier so that the devices 10, 20, 30 may derive a new session key which then is used in encrypting and decrypting the audio stream 12.

Access by the permanent members 20 to the stream 10 is given as long as the permanent members possess a valid master key, e.g., as long as the master key is not changed by the broadcasting device 10, while the temporary members 30 have access to the stream 12 as long as they possess a valid group key, e.g., as long as the broadcasting device 10 does not use a new group key. Consequently, access to the stream 12 by the temporary members 30 can be terminated by the broadcasting device 10 by no longer using the group key previously derived from the master key and distributed to the temporary members 30, e.g., by using a new guest key diversifier by the broadcasting device 10, which results in a new guest key being derived from the master key.

It has to be noted that such change of the group key / group key diversifier does not require any transmission of stream access information to the permanent members 20 via a secure channel, since the new guest key diversifier may be transmitted via an unsecure channel, for example in clear.

In some implementations, preferably, the broadcasting protocol may be a Bluetooth protocol. In this case, the required keys and key diversifiers may be generated using a true random number generator or a pseudo-random number generator of sufficient quality to generate a key or a key diversifier of an appropriate size, such as 128 bits, as is known from Bluetooth.

In some implementations, the group key may be derived preferably using the existing Bluetooth key derivation primitives, namely the AES-CMAC-128 function. The session key may be derived by all devices using the same key derivation functions as used in the Bluetooth specification.

The stream access information distribution requiring a secure channel, namely the distribution of the master key and of the group key, may be achieved, according to one example, by an out-of-band distribution, e.g., outside of the Bluetooth network, or, according to another example, by the "transport specific key distribution" phase of the Bluetooth pairing process between the broadcasting device 10 and the permanent members 20 or the temporary members 30, respectively, may be used (the latter example requires a one-time-bidirectional link between the broadcasting device 10 and the respective receiver device 20, 30).

When using a Bluetooth protocol for broadcasting, the stream may be encrypted by the broadcasting device 10 by using, in addition to the session key, a sequence of nonces as specified in the Bluetooth specification, wherein each nonce is made up of an initialization vector. While such initialization vector in the Bluetooth specification is made up of two components, each supplied by the two communicating devices in a point-to-point configuration, in an uni-directional broadcast setting this has to be modified such that the initialization vector is supplied solely by the broadcasting device 10, namely by broadcasting advertisement packets or extended advertisement packets. A nonce also makes use of a packet counter which is synchronized between the two communicating devices, so that for an uni-directional broadcast setting this must be modified in that the broadcasting device 10 repeatedly transmits the packet counter in order to enable the receiver devices to recreate the nonce used by the broadcasting device 10 when encrypting the data stream 12.

As shown in the example of Fig. 5, the two groups of receiver devices 20, 30, namely the permanent group 22 and the temporary group 30, are distinguished by their long-term key, namely the master key for the permanent group 22 and the group key for the temporary group 32, which has been securely distributed to the respective group member and which is stored in the respective group member. Consequently, the process of Fig. 5 may be extended to a plurality of temporary groups, for example a first temporary group 32 having several members 30 and a second temporary group 42 having several members 40, as illustrated in Fig. 13.

In such case, a first group key diversifier (and a resulting first group key derived from the master key by applying the first group key diversifier) would be associated with the first temporary group 32 by distributing the respective first group key to the members 30 of the first temporary group 32, and a second group key diversifier (and a respective second group key derived from the master key by applying a second group key diversifier) would be associated with the second temporary group 42 by distributing the second group key to the members 40 of the second temporary group 42. Before initiating a streaming session, the broadcasting device 10 then would select one of the group key diversifiers and distribute it to the members 20 of the permanent group 22 so that the members 20 of the permanent group 22 can derive the respective group key from the master key. Further, the selected group key diversifier is also transmitted to the temporary groups 32 and 42, so that the members of the matching temporary group 32, 42 may retrieve their associated group key (which is the selected group key). The broadcasting device 10 then generates and distributes a session key diversifier for deriving the session key from the selected group key. The group key diversifier can thus be considered a group identifier.

For example, if the broadcasting device 10 selects the group key of the first temporary group 32, then only the members 30 of the first temporary group 32 will be able to derive the valid session key to be used in decrypting the audio stream 12. If the broadcasting device 10 selects the group key of the second temporary group 42, then only the members 40 of the second temporary group 42 will be able to derive the valid session key to be used in decrypting the audio stream 12. Similarly, there may be one group key diversifier which is specific to the permanent group 22 so as to identify the permanent group 22 in the sense that this group key diversifier does not belong to any of the group keys associated with one of the temporary groups. Thus, if the broadcasting device 10 selects that group key diversifier, only the members 20 of the permanent group 22 will be able to derive the valid session key to be used in decrypting the audio stream 12.

In some implementations, a receiver device may be a member of more than one of the temporary groups, in which case the receiver device receives and stores all group keys specific to the respective temporary groups. For example, the device 50 in Fig. 13 may be a member of the first temporary group 32 and of the second temporary group 42 and therefore would receive and store both group keys. In this case, when receiving the group key diversifier selected by the broadcasting device 10 (for example the group key diversifier associated with the first temporary group 32), the receiver device 50 would retrieve the associated group key and then would be able to derive the correct session key when having received the session key diversifier.

The flowchart of Fig. 7B shows a variant of the flowchart of Fig. 7A, wherein, along with the master key, the master key diversifier is also distributed and stored in a key/value database where the masterKeyDiversifier serves as a database key (identifier) and the master key as the value.

The flowchart of Fig. 9B shows a variant of the flowchart of Fig. 9A, along with the guest key, the guest key diversifier is also distributed and stored in a key/value database with the guest key diversifier as a database key (idientifier) and the guest key as the value. The guest key diversifier subsequently broadcast (cf. Fig. 11A) allows the receiver to look up the key identified by the guest key diversifier.

The flowchart of Fig. 11B shows a variant of the flowchart of Fig. 11A, wherein the temporary group member uses the guest key diviersifier as a database key to look up the appropriate guest key (the database stores <guestKeyDiversifier, guestKey> pairs to support multiple groups in a single (temporary) group member).

The disclosure can be applied not only to a system with a single broadcasting device 10 (e.g., to point-to-multipoint-structure), but also to systems having a plurality of broadcast devices (e.g., to a multipoint-to-multipoint-structure). In such case, each broadcast device would generate its own master key and would have its own group key diversifier (or set of group key diversifiers in case that there is a plurality of temporary groups). Each broadcast device would have its own address by which it can be identified by the receiver devices. The phrases "in some implementations," "according to some implementations," "in the implementations shown," "in other implementations," and generally mean the particular feature, structure, or characteristic following the phrase is included in at least one implementation of the disclosure, and may be included in more than one implementation. In addition, such phrases do not necessarily refer to the same embodiments or different implementations.

The above detailed description of examples of the disclosure is not intended to be exhaustive or to limit the disclosure to the precise form disclosed above. While specific examples for the disclosure are described above for illustrative purposes, various equivalent modifications are possible within the scope of the disclosure, as those skilled in the relevant art will recognize. For example, while processes or blocks are presented in a given order, alternative implementations may perform routines having steps, or employ systems having blocks, in a different order, and some processes or blocks may be deleted, moved, added, subdivided, combined, and/or modified to provide alternative or subcombinations. Each of these processes or blocks may be implemented in a variety of different ways. Also, while processes or blocks are at times shown as being performed in series, these processes or blocks may instead be performed or implemented in parallel, or may be performed at different times. Further any specific numbers noted herein are only examples: alternative implementations may employ differing values or ranges.

## Claims

1. A method of transmitting an encrypted audio stream (12) from a transmitter device (10) to a plurality of receiver devices (20, 30, 40, 50), wherein part of the receiver devices (20) are members of a permanent group (22) and part of the receiver devices (30, 40, 50) are members of a temporary group (32, 42), the method comprising:
generating, by the transmitter device (10), a master key and distributing, by the transmitter device (10), the master key to the members of the permanent group; generating, by the transmitter device (10), a group key diversifier specific to the temporary group and deriving, by the transmitter device (10), a group key from the master key by using the group key diversifier;
distributing, by the transmitter device (10), the group key to the members of the temporary group;
distributing, by the transmitter device (10), the group key diversifier to the members of the permanent group;
deriving, by the members of the permanent group, the group key from the master key using the group key diversifier;
using, by the transmitter device (10), the group key to encrypt the audio stream; and
decrypting the audio stream, by the receiver devices, using the group key.

2. The method of claim 1, further comprising:
Generating, by the transmitter device (10), a session key diversifier specific to each streaming session;
distributing the session key diversifier to the members (20) of the permanent group (22) and to the members (30, 40, 50) of the temporary group (32, 42); and deriving, by the transmitter device (10), the members of the permanent group and the members of the temporary group, the session key from the group key by using the session key diversifier, wherein the session key is used to encrypt and decrypt the audio stream.

3. The method of claim 2, wherein the session key diversifier is transmitted in clear from the transmitter device (10) to the receiver devices (20, 30, 40, 50).

4. The method of one of claims 2 to 3, wherein a new streaming session is started by changing the session key diversifier into a new session key diversifier and distributing the new session key diversifier.

5. The method of one of the preceding claims, wherein the master key is distributed in a secure fashion from the transmitter device to the members (20) of the permanent group (22).

6. The method of claim 5, wherein the master key is distributed out-of-band or during the "transport specific key distribution" phase of a Bluetooth pairing process between the transmitter device (10) and the members (20) of the permanent group (22) to the members of the permanent group.

7. The method of one of the preceding claims, wherein the group key is transmitted in a secure fashion from the transmitter device (10) to the members (30, 40, 50) of the temporary group (32, 42).

8. The method of claim 7, wherein the group key is distributed out-of-band or during the "transport specific key distribution" phase of a Bluetooth pairing process between the transmitter device (10) and the members (30, 40, 50) of the temporary group (32, 42) to the members of the temporary group.

9. The method of one of the preceding claims, wherein the group key diversifier is transmitted from the transmitter device to the members (20) of the permanent group (22) in clear.

10. The method of claim 9, wherein the group key diversifier is stored by the transmitter device (10).

11. The method of one of the preceding claims, wherein access to the encrypted stream by the members (30, 40, 50) of the temporary group (32, 42) is removed by no longer using the group key derived by using the group key diversifier specific to the temporary group in the encrypting of the stream.

12. The method of one of the preceding claims, wherein at least one of the master key, the group key diversifier and the session key diversifier, if any, is generated by using a random number generator or a pseudo-random number generator.

13. The method of one of the preceding claims, wherein the group key and/or the session key, if any, is derived by using Bluetooth key derivation primitives, and wherein all devices (10, 20, 30, 40, 50) use the same key derivation function.

14. The method of one of the preceding claims, wherein the transmitter device (10) uses a broadcast protocol so as to establish a point-to-multipoint structure with regard to the receiver devices (20, 30, 40, 50).

15. The method of claims 2 and 14, wherein the stream is encrypted by the transmitter device (10) by using the session key and a sequence of nonces according to Bluetooth.

16. A system comprising a transmitter device (10) and a plurality of receiver devices (20, 30, 40, 50), wherein part of the receiver devices forms part of a permanent group (20) and part of the receiver devices forms part of a temporary group (32, 42), the transmitter device being configured to transmit a common encrypted audio stream to the receiver devices;
wherein the transmitter device is further configured to
generate a master key and distribute the master key to the members of the permanent group;
generate a group key diversifier specific to the temporary group and derive a group key from the master key by using the group key diversifier;
distribute the group key to the members of the temporary group;
distribute the group key diversifier to the members of the permanent group; and
encrypt the audio stream by using the group key;
wherein the members of the permanent group are configured to
derive the group key from the master key via the group key diversifier, and
decrypt the audio stream by using the group key; and
wherein the members of the temporary group are configured to
decrypt the audio stream by using the group key.

## Patentansprüche

1. Verfahren zum Senden eines verschlüsselten Audio-Stroms (12) von einer Sendervorrichtung (10) an mehrere Empfängervorrichtungen (20, 30, 40, 50), wobei ein Teil der Empfängervorrichtungen (20) Mitglieder einer permanenten Gruppe (22) sind und ein Teil der Empfängervorrichtungen (30, 40, 50) Mitglieder einer temporären Gruppe (32, 42) sind, wobei das Verfahren Folgendes umfasst:
Erzeugen, durch die Sendervorrichtung (10), eines Hauptschlüssels und Verteilen, durch die Sendervorrichtung (10), des Hauptschlüssels an die Mitglieder der permanenten Gruppe;
Erzeugen, durch die Sendervorrichtung (10), eines Gruppenschlüsseldiversifikators, der für die temporäre Gruppe spezifisch ist, und Ableiten, durch die Sendervorrichtung (10), eines Gruppenschlüssels von dem Hauptschlüssel durch Verwenden des Gruppenschlüsseldiversifikators;
Verteilen, durch die Sendervorrichtung (10), des Gruppenschlüssels an die Mitglieder der temporären Gruppe;
Verteilen, durch die Sendervorrichtung (10), des Gruppenschlüsseldiversifikators an die Mitglieder der permanenten Gruppe;
Ableiten, durch die Mitglieder der permanenten Gruppe, des Gruppenschlüssels von dem Hauptschlüssel unter Verwendung des Gruppenschlüsseldiversifikators;
Verwenden, durch die Sendervorrichtung (10), des Gruppenschlüssels, um den Audio-Strom zu verschlüsseln; und
Entschlüsseln des Audio-Stroms durch die Empfängervorrichtungen unter Verwendung des Gruppenschlüssels.

2. Verfahren nach Anspruch 1, das ferner Folgendes umfasst:
Erzeugen, durch die Sendervorrichtung (10), eines Sitzungsschlüsseldiversifikators, der für jede Streaming-Sitzung spezifisch ist;
Verteilen des Sitzungsschlüsseldiversifikators an die Mitglieder (20) der permanenten Gruppe (22) und an die Mitglieder (30, 40, 50) der temporären Gruppe (32, 42); und
Ableiten, durch die Sendervorrichtung (10), die Mitglieder der permanenten Gruppe und die Mitglieder der temporären Gruppe, des Sitzungsschlüssels von dem Gruppenschlüssel durch Verwenden des Sitzungsschlüsseldiversifikators, wobei der Sitzungsschlüssel verwendet wird, um den Audio-Strom zu verschlüsseln und zu entschlüsseln.

3. Verfahren nach Anspruch 21, wobei der Sitzungsschlüsseldiversifikator unverschlüsselt von der Sendervorrichtung (10) an die Empfängervorrichtungen (20, 30, 40, 50) gesendet wird.

4. Verfahren nach einem der Ansprüche 2 bis 3, wobei eine neue Streaming-Sitzung durch Ändern des Sitzungsschlüsseldiversifikators in einen neuen Sitzungsschlüsseldiversifikator und Verteilen des neuen Sitzungsschlüsseldiversifikators gestartet wird.

5. Verfahren nach einem der vorhergehenden Ansprüche, wobei der Hauptschlüssel auf sichere Weise von der Sendervorrichtung an die Mitglieder (20) der permanenten Gruppe (22) verteilt wird.

6. Verfahren nach Anspruch 5, wobei der Hauptschlüssel außerhalb des Bandes oder während der "transportspezifischen Schlüsselverteilungs"-Phase eines Bluetooth-Paarungsvorgangs zwischen der Sendervorrichtung (10) und den Mitgliedern (20) der permanenten Gruppe (22) an die Mitglieder der permanenten Gruppe verteilt wird.

7. Verfahren nach einem der vorhergehenden Ansprüche, wobei der Gruppenschlüssel in einer sicheren Weise von der Sendervorrichtung (10) an die Mitglieder (30, 40, 50) der temporären Gruppe (32, 42) gesendet wird.

8. Verfahren nach Anspruch 7, wobei der Gruppenschlüssel außerhalb des Bandes oder während der "transportspezifischen Schlüsselverteilungs"-Phase eines Bluetooth-Paarungsvorgangs zwischen der Sendervorrichtung (10) und den Mitgliedern (30, 40, 50) der temporären Gruppe (32, 42) an die Mitglieder der temporären Gruppe verteilt wird.

9. Verfahren nach einem der vorhergehenden Ansprüche, wobei der Gruppenschlüsseldiversifikator unverschlüsselt von der Sendervorrichtung an die Mitglieder (20) der permanenten Gruppe (22) gesendet wird.

10. Verfahren nach Anspruch 9, wobei der Gruppenschlüsseldiversifikator durch die Sendervorrichtung (10) gespeichert wird.

11. Verfahren nach einem der vorhergehenden Ansprüche, wobei der Zugriff auf den verschlüsselten Strom durch die Mitglieder (30, 40, 50) der temporären Gruppe (32, 42) entfernt wird, indem der Gruppenschlüssel, der durch Verwenden des Gruppenschlüsseldiversifikators, der für die temporäre Gruppe spezifisch ist, abgeleitet wird, beim Verschlüsseln des Stroms nicht länger verwendet wird.

12. Verfahren nach einem der vorhergehenden Ansprüche, wobei der Hauptschlüssel und/oder der Gruppenschlüsseldiversifikator und/oder der Sitzungsschlüsseldiversifikator, wenn überhaupt, durch Verwenden eines Zufallszahlengenerators oder eines Pseudozufallszahlengenerators erzeugt wird.

13. Verfahren nach einem der vorhergehenden Ansprüche, wobei der Gruppenschlüssel und/oder der Sitzungsschlüssel, wenn überhaupt, durch Verwenden von Bluetooth-Schlüsselableitungsprimitiven abgeleitet wird und wobei alle Vorrichtungen (10, 20, 30, 40, 50) dieselbe Schlüsselableitungsfunktion verwenden.

14. Verfahren nach einem der vorhergehenden Ansprüche, wobei die Sendervorrichtung (10) ein Rundsendeprotokoll verwendet, um eine Punkt-zu-Mehrpunkt-Struktur in Bezug auf die Empfängervorrichtungen (20, 30, 40, 50) einzurichten.

15. Verfahren nach den Ansprüchen 2 und 14, wobei der Strom durch die Sendervorrichtung (10) durch Verwenden des Sitzungsschlüssels und einer Folge von Nonces gemäß Bluetooth verschlüsselt wird.

16. System, das eine Sendervorrichtung (10) und mehrere Empfängervorrichtungen (20, 30, 40, 50) umfasst, wobei ein Teil der Empfängervorrichtungen einen Teil einer permanenten Gruppe (20) bildet und ein Teil der Empfängervorrichtungen einen Teil einer temporären Gruppe (32, 42) bildet, wobei die Sendervorrichtung konfiguriert ist, einen gemeinsamen verschlüsselten Audio-Strom an die Empfängervorrichtungen zu senden;
wobei die Sendervorrichtung ferner konfiguriert ist zum:
Erzeugen eines Hauptschlüssels und Verteilen des Hauptschlüssels an die Mitglieder der permanenten Gruppe;
Erzeugen eines Gruppenschlüsseldiversifikators, der für die temporäre Gruppe spezifisch ist, und Ableiten eines Gruppenschlüssels von dem Hauptschlüssel unter Verwendung des Gruppenschlüsseldiversifikators;
Verteilen des Gruppenschlüssels an die Mitglieder der temporären Gruppe;
Verteilen des Gruppenschlüsseldiversifikators an die Mitglieder der permanenten Gruppe; und
Verschlüsseln des Audio-Stroms durch Verwenden des Gruppenschlüssels;
wobei die Mitglieder der permanenten Gruppe konfiguriert sind zum:
Ableiten des Gruppenschlüssels von dem Hauptschlüssel über den Gruppenschlüsseldiversifikator und
Entschlüsseln des Audio-Stroms durch Verwenden des Gruppenschlüssels; und
wobei die Mitglieder der temporären Gruppe konfiguriert sind zum:
Entschlüsseln des Audio-Stroms durch Verwenden des Gruppenschlüssels.

## Revendications

1. Procédé de transmission d'un flux audio chiffré (12) depuis un dispositif émetteur (10) à une pluralité de dispositifs récepteurs (20, 30, 40, 50), une partie des dispositifs récepteurs (20) étant membres d'un groupe permanent (22) et une partie des dispositifs récepteurs (30, 40, 50) étant membres d'un groupe temporaire (32, 42), le procédé comprenant :
la génération, par le dispositif émetteur (10), d'une clé maîtresse et la distribution, par le dispositif émetteur (10), de la clé maîtresse aux membres du groupe permanent ;
la génération, par le dispositif émetteur (10), d'un diversificateur de clé de groupe propre au groupe temporaire et la dérivation, par le dispositif émetteur (10), d'une clé de groupe à partir de la clé maîtresse au moyen du diversificateur de clé de groupe ;
la distribution, par le dispositif émetteur (10), de la clé de groupe aux membres du groupe temporaire ;
la distribution, par le dispositif émetteur (10), du diversificateur de clé de groupe aux membres du groupe permanent ;
la dérivation, par les membres du groupe permanent, de la clé de groupe à partir de la clé maîtresse au moyen du diversificateur de clé de groupe ;
l'utilisation, par le dispositif émetteur (10), de la clé de groupe pour chiffrer le flux audio ; et
le déchiffrement du flux audio, par les dispositifs récepteurs, au moyen de la clé de groupe.

2. Procédé selon la revendication 1, comprenant en outre :
la génération, par le dispositif émetteur (10), d'un diversificateur de clé de session propre à chaque session de diffusion en flux continu ;
la distribution du diversificateur de clé de session aux membres (20) du groupe permanent (22) et aux membres (30, 40, 50) du groupe temporaire (32, 42) ; et
la dérivation, par le dispositif émetteur (10), les membres du groupe permanent et les membres du groupe temporaire, de la clé de session à partir de la clé de groupe au moyen du diversificateur de clé de session, la clé de session étant utilisée pour chiffrer et déchiffrer le flux audio.

3. Procédé selon la revendication 2, dans lequel le diversificateur de clé de session est transmis en clair depuis le dispositif émetteur (10) aux dispositifs récepteurs (20, 30, 40, 50).

4. Procédé selon l'une des revendications 2 à 3, dans lequel une nouvelle session de diffusion en flux continu est lancée par changement du diversificateur de clé de session pour un nouveau diversificateur de clé de session et distribution du nouveau diversificateur de clé de session.

5. Procédé selon l'une des revendications précédentes, dans lequel la clé maîtresse est distribuée d'une manière sécurisée depuis le dispositif émetteur aux membres (20) du groupe permanent (22).

6. Procédé selon la revendication 5, dans lequel la clé maîtresse est distribuée hors bande ou durant la phase dite de "distribution de clé propre au transport" d'un processus d'appairage Bluetooth entre le dispositif émetteur (10) et les membres (20) du groupe permanent (22) aux membres du groupe permanent.

7. Procédé selon l'une des revendications précédentes, dans lequel la clé de groupe est transmise d'une manière sécurisée depuis le dispositif émetteur (10) aux membres (30, 40, 50) du groupe temporaire (32, 42).

8. Procédé selon la revendication 7, dans lequel la clé de groupe est distribuée hors bande ou durant la phase dite de "distribution de clé propre au transport" d'un processus d'appairage Bluetooth entre le dispositif émetteur (10) et les membres (30, 40, 50) du groupe temporaire (32, 42) aux membres du groupe temporaire.

9. Procédé selon l'une des revendications précédentes, dans lequel le diversificateur de clé de groupe est transmis en clair depuis le dispositif émetteur aux membres (20) du groupe permanent (22).

10. Procédé selon la revendication 9, dans lequel le diversificateur de clé de groupe est stocké par le dispositif émetteur (10).

11. Procédé selon l'une des revendications précédentes, dans lequel l'accès au flux chiffré par les membres (30, 40, 50) du groupe temporaire (32, 42) est supprimé en cessant d'utiliser la clé de groupe dérivée au moyen du diversificateur de clé de groupe propre au groupe temporaire dans le chiffrement du flux.

12. Procédé selon l'une des revendications précédentes, dans lequel, le cas échéant, au moins un élément parmi la clé maîtresse, le diversificateur de clé de groupe et le diversificateur de clé de session est généré au moyen d'un générateur de nombres aléatoires ou d'un générateur de nombres pseudo-aléatoires.

13. Procédé selon l'une des revendications précédentes, dans lequel, le cas échéant, la clé de groupe et/ou la clé de session sont/est dérivées/dérivée au moyen de primitives de dérivation de clé Bluetooth, et dans lequel tous les dispositifs (10, 20, 30, 40, 50) utilisent la même fonction de dérivation de clé.

14. Procédé selon l'une des revendications précédentes, dans lequel le dispositif émetteur (10) utilise un protocole de diffusion de manière à établir une structure point à multipoint vis-à-vis des dispositifs récepteurs (20, 30, 40, 50).

15. Procédé selon les revendications 2 et 14, dans lequel le flux est chiffré par le dispositif émetteur (10) au moyen de la clé de session et d'une séquence de nonces selon Bluetooth.

16. Système comprenant un dispositif émetteur (10) et une pluralité de dispositifs récepteurs (20, 30, 40, 50), une partie des dispositifs récepteurs faisant partie d'un groupe permanent (20) et une partie des dispositifs récepteurs faisant partie d'un groupe temporaire (32, 42), le dispositif émetteur étant configuré pour transmettre un flux audio chiffré commun aux dispositifs récepteurs ;
le dispositif émetteur étant configuré en outre pour
générer une clé maîtresse et distribuer la clé maîtresse aux membres du groupe permanent ;
générer un diversificateur de clé de groupe propre au groupe temporaire et dériver une clé de groupe à partir de la clé maîtresse au moyen du diversificateur de clé de groupe ;
distribuer la clé de groupe aux membres du groupe temporaire ;
distribuer le diversificateur de clé de groupe aux membres du groupe permanent ; et
chiffrer le flux audio au moyen de la clé de groupe ;
les membres du groupe permanent étant configurés pour
dériver la clé de groupe à partir de la clé maîtresse via le diversificateur de clé de groupe, et
déchiffrer le flux audio au moyen de la clé de groupe ; et
les membres du groupe temporaire étant configurés pour
déchiffrer le flux audio au moyen de la clé de groupe.
